# EUROPÄISCHE PATENTSCHRIFT

(11) **EP 1 037 445 B1**
(45) Veröffentlichungstag und Bekanntmachung des Hinweises auf die Patenterteilung: **18.07.2007**
(21) Anmeldenummer: 00105444.4
(22) Anmeldetag: 15.03.2000
(51) Int. Cl.: H04M 1/02, H04M 1/725

(54) **Handapparat für Telekommunikations-Endgeräte**
Handset for telecommunication terminals
Combiné pour terminaux de télécommunications

(30) Priorität: 16.03.1999 DE 29905221 U
(43) Veröffentlichungstag der Anmeldung: 20.09.2000
(73) Patentinhaber: Aastra DeTeWe GmbH, 10997 Berlin (DE)
(72) Erfinder: Hahn, Max, 14163 Berlin (DE); Krebs, Kolja, 12051 Berlin (DE)
(74) Vertreter: Fischer, Uwe

(56) Entgegenhaltungen:
- EP-A- 0 468 726
- EP-A- 0 872 996
- EP-A- 0 912 030
- GB-A- 2 316 789
- JP-A- 8 186 870
- US-A- 4 982 424

## Beschreibung

Die Erfindung bezieht sich auf einen Handapparat für Telekommunikations-Endgeräte gemäß dem Oberbegriff des Anspruchs 1.

Handapparate von Telekommunikations-Endgeräten wie schnurlosen Telefonen oder Mobiltelefone (Handys) sind vorzugsweise aus zwei Gehäuseschalen zusammengesetzt, in denen eine elektronische Baugruppe insbesondere auf einer Leiterplatte mit einer elektronischen Steuereinrichtung und einer Sende- und Empfangseinrichtung sowie ein Akkumulator zur Stromversorgung des Handapparates angeordnet sind. Die Gehäuseschalen nehmen die elektroakustischen Wandler in Form einer Hörkapsel und eines Mikrofons, eine vorzugsweise als Flüssigkristallanzeige ausgebildete Anzeigeeinrichtung sowie eine Tastatur mit Steuer- oder Ruftasten und alphanumerischen Tasten auf. Zur Abgabe von Tonrufsignalen ist ein elektroakustischer Wandler im Gehäuse angeordnet.

Der Handapparat für Telekommunikations-Endgeräte wird beispielsweise als Teil eines schnurlosen Telefons zum Aufladen des Akkumulators in eine Basisstation oder eine Ladestation eingesetzt und über elektrische Kontakte mit einer in der Basis- oder Ladestation angeordneten Ladeeinrichtung verbunden. Zu diesem Zweck ist die Basis- oder Ladestation mit einem speisenden Netz verbunden. Die Basisstation weist zusätzlich eine Sende- und Empfangseinrichtung auf, die Funksignale an den Handapparat abgibt bzw. Funksignale vom Handapparat empfängt und diese in ein Fernsprechnetz einkoppelt.

Zur Anzeige des Ladevorganges bei einem in eine Basisstation oder eine Ladestation eingesetzten Handapparat wird eine in der Basis- oder Ladestation angeordnete Leuchtdiode angesteuert, die erlischt, wenn der Ladevorgang beendet ist. Alternativ oder ergänzend hierzu kann der Ladevorgang in der Anzeigeeinrichtung des Handapparates zur Anzeige gebracht werden. Weiterhin können in der Anzeigeeinrichtung des Handapparetes die Signalfeldstärken beispielsweise in Form eines Balkendiagramms, der Ladezustand des Akkumulators sowie über die Tastatur eingegebene Steuerfunktionen oder alphanumerische Angaben oder Inhalte eines im Handapparat integrierten Speichers angezeigt werden.

Ein Handapparat mit einer oder mehreren Leuchtdioden ist aus dem japanischen Abstract JP 8 - 186870 sowie aus der nachveröffentlichten Europäischen Patentanmeldung EP 0 912 030 A1 bekannt. Die Leuchtdioden sind dabei jeweils an einer Kante des Gehäuses angeordnet, so dass sie aus zwei Richtungen gesehen werden können.

Aufgabe der vorliegenden Erfindung ist es, einen Handapparat für Telekommunikations-Endgeräte der gattungsgemäßen Art so weiterzubilden, dass wesentliche Funktionen oder Betriebszustände optimal angezeigt bzw. signalisiert werden.

Diese Aufgabe wird erfindungsgemäß durch das kennzeichnende Merkmal des Anspruchs 1 gelöst.

Die erfindungsgemäße Lösung gewährleistet die optimale Anzeige bzw. Signalisierung wesentlicher Funktionen oder Betriebszustände des Handapparates für Telekommunikations--Endgeräte, wobei die Anzeige oder Signalisierung parallel zu sonstigen optischen oder akustischen Anzeigen des Handapparates erfolgen kann.

Die optische Signaleinrichtung ist erfindungsgemäß zumindest als Ringabschnitt, vorzugsweise aber ringförmig um den elektroakustischen Wandler angeordnet.

Die Kombination von elektroakustischem Wandler und zusätzlicher optischer Signaleinrichtung gewährleistet eine optimale Erkennbarkeit der für die Funktion und den Betriebszustand des Handapparates wesentlichen Signale und damit eine verbesserte Wahrnehmbarkeit durch den Benutzer.

Grundsätzlich kann die Kopplung der optischen Signaleinrichtung sowohl mit der Hörkapsel als auch dem Mikrofon als elektroakustischem Wandler des Handapparates vorgenommen werden. Aus Gründen der besseren Sichtbarkeit und wegen des im allgemeinen größeren Durchmessers der Hörkapsel wird die optische Signaleinrichtung vorzugsweise mit der Hörkapsel des Handapparates gekoppelt, zumal bei einem in die Basisstation oder Ladestation eingesetzten Handapparat in vielen Anwendungsfällen das Mikrofon verdeckt ist, während die Hörkapsel am oberen Gehäuserand angeordnet und eine mit der Hörkapsel verbundene optische Signaleinrichtung für den Benutzer optimal erkennbar ist.

Der elektroakustische Wandler ist wahlweise in die optische Signaleinrichtung einsetzbar oder die optische Signaleinrichtung kann um den elektroakustischen Wandler gelegt werden, wozu der elektroakustische Wandler vorzugsweise eine umlaufende Nut aufweist, in die eine kreissegment förmige optische Signaleinrichtung eingelegt oder eingesteckt wird. Optional sind die optische Signaleinrichtung und der elektroakustische Wandler durch einen umlaufenden Gehäusesteg voneinander getrennt.

Die optische Signaleinrichtung kann aus mehreren Ringabschnitten bestehen, beispielsweise aus mehreren ringförmig geschlossenen und durch radiale Stege voneinander getrennten Segmenten.

Alternativ kann die optische Signaleinrichtung aus mehreren Ringen mit unterschiedlichem Durchmesser bestehen, die konzentrisch um die Hörkapsel angeordnet sind.

Zur Anzeige unterschiedlicher Funktionen oder Betriebszustände des Handapparates gibt die optische Signaleinrichtung mindestens zwei voneinander verschiedene Farben und/oder mindestens zwei voneinander getrennte Bereiche unterschiedlicher Farbgebung und/oder mindestens zwei Lichtsignale unterschiedlicher Frequenz und/oder mindestens zwei Lichtsignale unterschiedlicher Farbsättigung oder Leuchttstärke ab.

In der praktischen Anwendung zeigt die optische Signaleinrichtung vorzugsweise mindestens zwei der folgenden Funktionen oder Betriebszustände des Handapparates an:
- DECT-Empfang des Telekommunikations-Endgerätes
- Signalisierung ankommender Rufe bei abgeschalteter oder aktivierter akustischer Signaleinrichtung
- Übertragung von Daten von oder zum Handapparat
- Laden des Akkumulators des Handapparates.

Anhand eines in der Zeichnung dargestellten Ausführungsbeispieles soll der der Erfindung zugrundeliegende Gedanke näher erläutert werden. Es zeigen:
- Figur 1 -: eine Draufsicht auf einen Handapparat für ein schnurloses Telefon oder ein Mobiltelefon mit einer ersten Variante einer optischen Signaleinrichtung;
- Figur 2 -: eine perspektivische Ansicht des Handapparates gemäß Figur 1;
- Figuren 3 und 4 -: eine Draufsicht auf einen Teil eines Handapparates ür ein schnurloses Telefon oder ein Mobiltelefon mit zwei weiteren Varianten einer optischen Signaleinrichtung;
- Figur 5 -: ein Blockschaltbild einer Basisstation und eines Handapparates für ein schnurloses Telefon mit einer optischeb Signaleinrichtung.

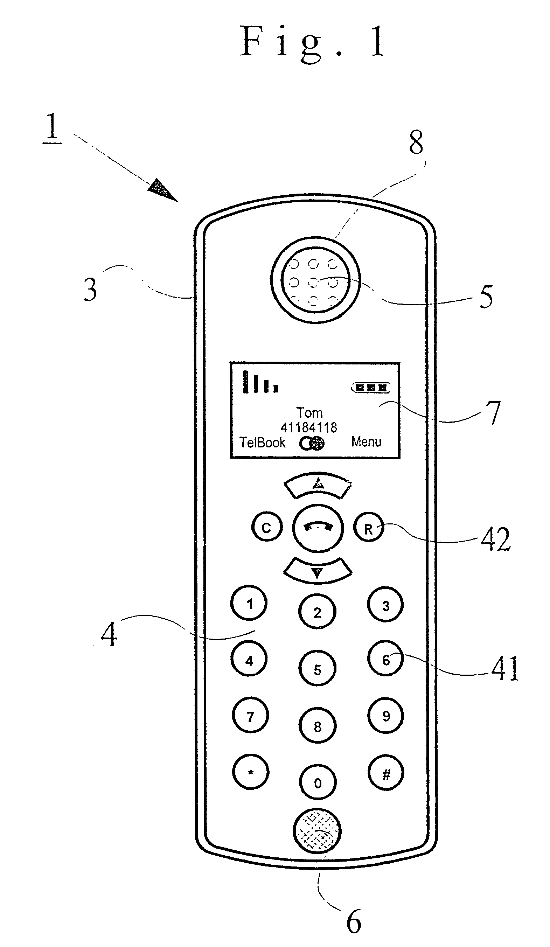

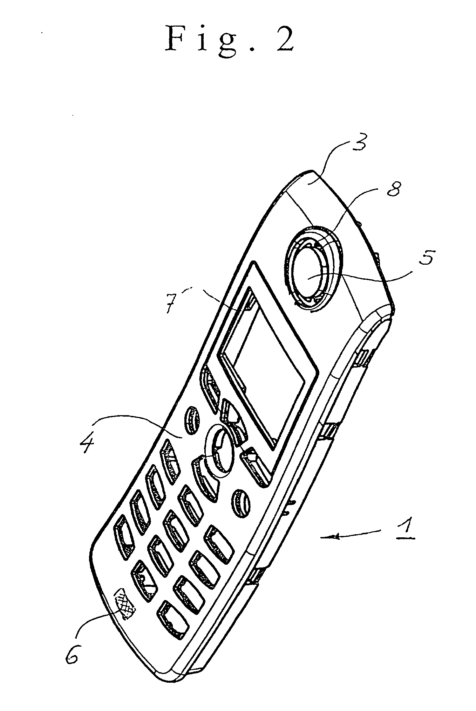

Der in Figur 1 in Draufsicht und in Figur 2 in perspektivischer Ansicht dargestellte Handapparat 1 ist aus zwei Gehäusehälften zusammengesetzt, die durch Rast- und Schraubelemente lösbar miteinander verbunden sind. Die obere Gehäuseschale 3 weist Öffnungen zur Aufnahme einer Tastatur 4, einer Hörkapsel 5, eines Mikrofons 6 und einer Flüssigkristallanzeige 7 auf. Die Tastatur 4 enthält mehrere alphanumerische Tasten 41 zur Dateneingabe sowie mehrere Steuertasten 42 zur Auslösung von Steuerfunktionen, zur Menüführung und dergleichen.

Die Anzeigeeinrichtung 7 enthält überlicherweise eine Anzeige der Signalfeldstärke in Form eines Balkendiagramms, des Ladezustands des Akkumulators sowie der eingegebenen bzw. der aus der Menüführung erhaltenen alphanumerischen Zeichen und verschiedenen Steuerfunktionen.

Über nicht näher dargestellte Kontakte, die überlicherweise an der Unterseite des Handapparates 1 im Bereich des Mikrofons 6 angeordnet sind, wird der Handapparat 1 mit entsprechenden Gegenkontakten einer Basisstation oder Ladestation verbunden, die eine Ladeeinrichtung zum Aufladen des im Handapparat 1 integrierten Akkumulators aufweist.

Erfindungsgemäß ist ringförmig um die Hörkapsel 5 eine optische Signaleinrichtung 8 angeordnet, die bei bestimmten Funktionen oder Betriebszuständen des Handapparates 1 bzw. des Telekommunikations-Endgerätes aktiviert wird. Die optische Anzeige kann wahlweise oder in Kombination in der Darstellung unterschiedlicher Farben und/oder unterschiedlicher Signalfrequenzen, Farbsättigungen oder Leuchtstärken bestehen. Die unterschiedlichen Signalfrequenzen können beispielsweise Dauersignale oder Blinksignale unterschiedlicher Frequenz sein.

Vorzugsweise werden als wesentliche Funktionen oder Betriebszustände des Handapparates durch die optische Signaleinrichtung der DECT-Empfang des Telekommunikations-Endgerätes, die Signalisierung ankommender Rufe bei abgeschalteter oder aktivierter akustischer Signaleinrichtung, die Übertragung von Daten von oder zum Handapparat und das Laden des Akkumulators des Handapparates angezeigt.

Eine Kombination der Darstellung verschiedener Farben mit unterschiedlichen Frequenzen (Blinken oder Dauerlicht) kann beispielsweise folgende Optionen erfüllen:

| | |
|---|---|
| Grün/Dauerlicht: | Erhaltungsladung des Akkumulators |
| Grün/blinkend: | Schnellladung des Akkumulators |
| Gelb/Dauerlicht: | DECT-Empfang |
| Rot/Dauerlicht: | ankommender Ruf |
| Rot/blinkend: | Meldung, z.B. Terminruf, in Verbindung mit einer Anzeige auf dem Anzeigenfeld 7 des Handapparats |
| Blau/Dauerlicht: | Nachtschaltung oder Anrufschutz aktiv |

Zusätzlich kann die Veränderung der Farbsättigung einer beliebigen Farbe oder eine sich ändernde Blinkfrequenz die abnehmende bzw. zunehmende Signalfeldstärke angeben.

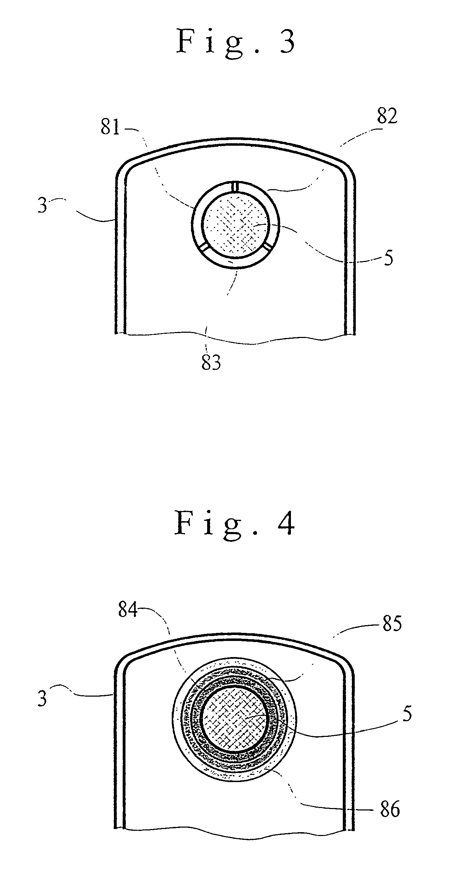

In dem Ausführungsbeispiel gemäß den Figuren 1 und 2 besteht die optische Signaleinrichtung aus einem ringförmig um die Hörkapsel 5 angeordneten Signalgeber 8. Alternativ hierzu kann gemäß Figur 3 die optische Signaleinrichtung aus mehreren Segmenten 81, 82, 83, die ringförmig um die Hörkapsel 5 angeordnet sind, oder gemäß Figur 4 aus mehreren konzentrischen Ringen 84, 85, 86 bestehn, die ebenfalls um die Hörkapsel 5 angeordnet sind, bestehen. Selbstverständlich sind auch Kombinationen von Segmenten und konzentrischen Ringen entsprechend den Figuren 3 und 4 möglich. Die Grenze der möglichen Darstellungen ist lediglich dadurch vorgegeben, daß eine Anzeige zu vieler Betriebszustände oder Funktionen des Handapparates zu mangelhaften Zuordnungen seitens des Benutzers oder zu mangelnder Erkennbarkeit führt.

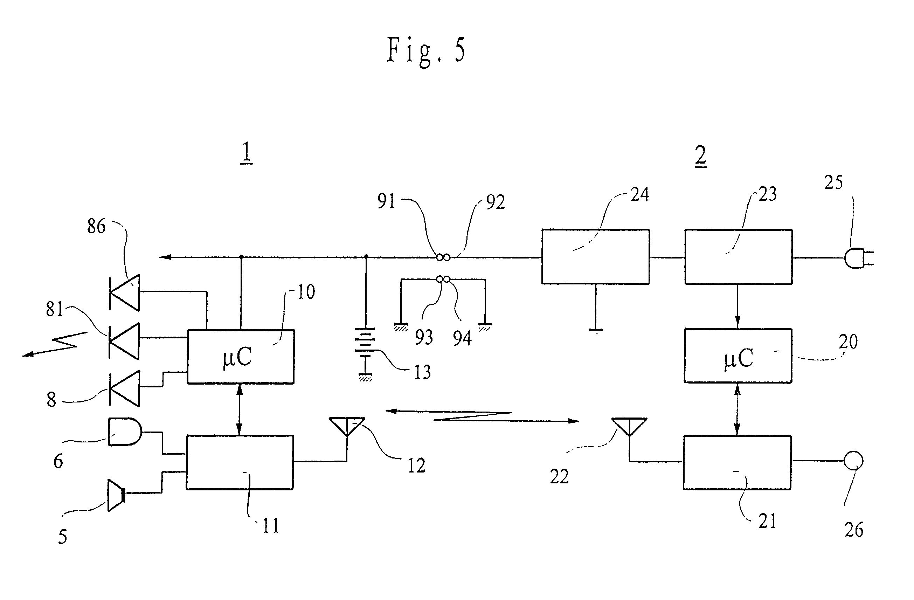

Figur 5 zeigt in einem schematischen Blockschaltbild eine Schaltungsanordnung zur Umsetzung einer optischen Signaleinrichtung entsprechend den vorstehend beschriebenen Ausführungsbeispielen anhand eines schnurlosen Telefons mit einem Handapparat 1 und einer Basisstation 2.

Die Basisstation 2 weist eine Steuerschaltung 20 in Form eines Mikroprozessors sowie einen Sender/Empfänger 21 auf, der einerseits mit einer Antenne 22 und andererseits mit dem Fernsprechnetz 26 verbunden ist. Der Mikroprozessor 20 sowie der Sender/Empfänger 21 werden aus einer Spannungsversorgung 23 gespeist, die an ein Spannungsnetz 25 angeschlossen ist. Die Spannungsversorgung 23 speist zusätzlich eine Ladeschaltung 24, die mit Kontakten 92, 94 verbunden ist. In diese Kontakte 92, 94 sind die Kontakte 91, 93 des Handapparates 1 zum Aufladen des Akkumulators 13 des Handapparates 1 einsetzbar.

Der Handapparat 1 weist ebenfalls eine (Mikroprozessor-) Steuerschaltung 10 sowie einen wechselseitig mit der Steuerschaltung 10 verbundenen Sender/Empfänger 11 auf. Der Sender/Empfänger 11 ist mit einer Antenne 12 verbunden und gibt ausgangsseitig Signale an eine Hörkapsel 5 ab und empfängt Signale von einem Mikrofon 6.

Zur Darstellung verschiedener Funktionen und/oder Betriebszustände des Handapparates bzw. des Telekommunikations-Endgerätes steuert die Steuerschaltung 10 zusätzlich optische Signalgeber beispielsweise in Form von Leuchtdioden 8 bis 86 gemäß den vorstehend beschriebenen Ausführungsbeispielen entsprechend den Figuren 1 bis 4 an. Die Ansteuerung kann sowohl an einzelne Leuchtdioden 8 bis 86 als auch an mehrere Leuchtdioden 8 bis 86 gleichzeitig erfolgen.

Die Erfindung beschränkt sich in ihrer Ausführung nicht auf die vorstehend angegebenen bevorzugten Ausführungsbeispiele, sondern es ist eine Anzahl von Varianten denkbar, welche von der in der Zeichnung und Beschreibung dargestellten Lösung auch bei grundsätzlich andersgearteten Ausführungen Gebrauch macht.

## Patentansprüche

1. Handapparat für Telekommunikations-Endgeräte mit einem Gehäuse zur Aufnahme einer elektronischen Baugruppe, einer Tastatur und elektroakustischen Wandlers, insbesondere für schnurlose Telefone oder Mobiltelefone mit integriertem Akkumulator und einer vorzugsweise als Flüssigkristallanzeige ausgebildeten Anzeigeeinrichtung,
**dadurch gekennzeichnet, dass**
eine optische Signaleinrichtung (8; 81 bis 86) zumindest als Ringabschnitt, vorzugsweise aber ringförmig um den elektroakustischen Wandler (5, 6) angeordnet ist.

2. Handapparat nach Anspruch 1 **dadurch gekennzeichnet, dass**
der elektroakustische Wandler (5, 6) in Draufsicht kreisförmig ausgebildet ist.

3. Handapparat nach Anspruch 1 oder 2, **dadurch gekennzeichnet, dass**
der elektroakustische Wandler (5, 6) in die optische Signaleinrichtung (8 ; 81 bis 86) einsetzbar ist.

4. Handapparat nach einem der vorangehenden Ansprüche, **dadurch gekennzeichnet, dass** die optische Signaleinrichtung (8; 81 bis 86) um den elektroakustischen Wandler gelegt ist.

5. Handapparat nach einem der vorangehenden Ansprüche, 5, **dadurch gekennzeichnet, dass** der elektroakustische Wandler (5, 6) eine umlaufende Nut aufweist, in die eine kreissegmentförmige optische Signaleinrichtung (8; 81 bis 86) eingelegt oder eingesteckt ist.

6. Handapparat nach einem der vorangehenden Ansprüche, **dadurch gekennzeichnet, dass** die optische Signaleinrichtung (8; 81 bis 86) und der elektroakustische Wandler (5, 6) durch einen umlaufenden Gehäusesteg voneinander getrennt sind.

7. Handapparat nach mindestens einem der vorangehenden Ansprüche, **dadurch gekennzeichnet, dass** der elektroakustische Wandler aus einer in der Draufsicht kreisförmigen Hörkapsel (5) und die optische Signaleinrichtung (8; 81 bis 86) aus mindestens einem Ringabschnitt besteht.

8. Handapparat nach Anspruch 7, **dadurch gekennzeichnet, dass** die optische Signaleinrichtung (8; 81 bis 86) ringförmig geschlossen um die Hörkapsel (5) angeordnet ist.

9. Handapparat nach Anspruch 7 oder 8, **dadurch gekennzeichnet, dass** die optische Signaleinrichtung aus mehreren Teilkreissegmenten (81 bis 83) besteht, die durch radial gerichtete Stege voneinander getrennt und vorzugsweise ringförmig geschlossen um die Hörkapsel (5) angeordnet sind.

10. Handapparat nach Anspruch 7, **dadurch gekennzeichnet, dass** die optische Signaleinrichtung aus mehreren Ringen (84 bis 86) mit unterschiedlichem Durchmesser besteht, die konzentrisch um die Hörkapsel (5) angeordnet sind.

11. Handapparat nach mindestens einem der vorangehenden Ansprüche, **dadurch gekennzeichnet, dass** die optische Signaleinrichtung (8; 81 bis 86) mindestens zwei voneinander verschiedene Farben für unterschiedliche Funktionen oder Betriebszustände des Handapparates (1) anzeigt.

12. Handapparat nach mindestens einem der vorangehenden Ansprüche, **dadurch gekennzeichnet, dass** die optische Signaleinrichtung (8; 81 bis 86) mindestens zwei voneinander getrennte Bereiche unterschiedlicher Farbgebung für unterschiedliche Funktionen oder Betriebszustände des Handapparates (1) aufweist.

13. Handapparat nach mindestens einem der vorangehenden Ansprüche, **dadurch gekennzeichnet, dass** die optische Signaleinrichtung (8; 81 bis 86) mindestens zwei Lichtsignale unterschiedlicher Frequenz für unterschiedliche Punktionen oder Betriebszustände des Handapparates (1) abgibt.

14. Handapparat nach mindestens einem der vorangehenden Ansprüche, **dadurch gekennzeichnet, dass** die optische Signaleinrichtung (8; 81 bis 86) mindestens zwei Lichtsignale unterschiedlicher Farbsättigung oder Leuchtstärke für unterschiedliche Funktionen oder Betriebszustände des Handapparates (1) abgibt.

15. Handapparat nach mindestens einem der vorangehenden Ansprüche, **dadurch gekennzeichnet, dass** die optische Signaleinrichtung (8; 81 bis 86) mindestens zwei der folgenden Funktionen oder Betriebszustände des Handapparates (1) anzeigt:
- DECT-Empfang des Telekommunikations-Endgerätes
- Signalisierung ankommender Rufe bei abgeschalteter oder aktivierter akustischer Signaleinrichtung
- Übertragung von Daten von oder zum Handapparat (1)
- Laden des Akkumulators (13) des Handapparates (1)

16. Handapparat nach mindestens einem der vorangehenden Ansprüche, **dadurch gekennzeichnet, dass** unterschiedliche Funktionen oder Betriebszustärlde des Handapparates (1) optischen Signaleinrichtung (8; 81 bis 86) angezeigt werden.

## Claims

1. Handset for telecommunications terminals having a housing for holding an electronics assembly, having a keypad and having an electroacoustic transducer, in particular for cordless telephones or mobile telephones with an integrated rechargeable battery and a display device which is preferably in the form of a liquid crystal display,
**characterized in that**
an optical signalling device (8; 81 to 86) is arranged at least as a ring section, but preferably in an annular shape around the electroacoustic transducer (5, 6).

2. Handset according to Claim 1, **characterized in that** the electroacoustic transducer (5, 6) is circular when viewed in plan view.

3. Handset according to Claim 1 or 2, **characterized in that** the electroacoustic transducer (5, 6) can be inserted into the optical signalling device (8; 81 to 86).

4. Handset according to one of the preceding claims, **characterized in that** the optical signalling device (8; 81 to 86) is located around the electroacoustic transducer.

5. Handset according to one of the preceding claims, **characterized in that** the electroacoustic transducer (5, 6) has a circumferential groove in which an optical signalling device (8; 81 to 86) which is in the form of a circle segment is inserted or plugged in.

6. Handset according to one of the preceding claims, **characterized in that** the optical signalling device (8; 81 to 86) and the electroacoustic transducer (5, 6) are separated from one another by a circumferential housing web.

7. Handset according to at least one of the preceding claims, **characterized in that** the electroacoustic transducer comprises an earpiece (5), which is circular when viewed in plan view, and the optical signalling device (8; 81 to 86) comprises at least one ring section.

8. Handset according to Claim 7, **characterized in that** the optical signalling device (8; 81 to 86) is arranged in a closed annular form around the earpiece (5).

9. Handset according to Claim 7 or 8, **characterized in that** the optical signalling device comprises a plurality of partial circle segments (81 to 83) which are separated from one another by radial webs and are preferably arranged in a closed annular shape around the earpiece (5).

10. Handset according to Claim 7, **characterized in that** the optical signalling device comprises a plurality of rings (84 to 86) with different diameters, which are arranged concentrically around the earpiece (5).

11. Handset according to at least one of the preceding claims, **characterized in that** the optical signalling device (8; 81 to 86) displays at least two mutually different colours for different functions or operating states of the handset (1).

12. Handset according to at least one of the preceding claims, **characterized in that** the optical signalling device (8; 81 to 86) has at least two mutually separate areas of different colour for different functions or operating states of the handset (1).

13. Handset according to at least one of the preceding claims, **characterized in that** the optical signalling device (8; 81 to 86) emits at least two light signals at different frequencies for different functions or operating states of the handset (1).

14. Handset according to at least one of the preceding claims, **characterized in that** the optical signalling device (8; 81 to 86) emits at least two light signals with different colour saturations or with different light intensities for different functions or operating states of the handset (1).

15. Handset according to at least one of the preceding claims, **characterized in that** the optical signalling device (8; 81 to 86) displays at least two of the following functions or operating states of the handset (1) :
- DECT reception of the telecommunications terminal,
- signalling of incoming calls when the acoustic signalling device is switched off or activated,
- transmission of data from or to the handset (1),
- charging of the rechargeable battery (13) in the handset (1).

16. Handset according to at least one of the preceding claims, **characterized in that** different functions or operating states of the handset (1) are displayed on the optical signalling device (8; 81 to 86).

## Revendications

1. Combiné téléphonique pour terminaux de télécommunication, avec un boîtier pour loger un ensemble électronique, un clavier et des transformateurs électroacoustiques, notamment pour des téléphones sans fil ou des téléphones mobiles, avec un accumulateur intégré et un dispositif d'affichage conçu de préférence comme un affichage à cristaux liquides,
**caractérisé en ce que**, un système de signalisation optique (8 ; 81 à 86) est disposé au moins sous la forme d'une section annulaire, mais de préférence sous forme annulaire autour du transformateur électroacoustique (5, 6).

2. Combiné téléphonique selon la revendication 1,
**caractérisé en ce que**
vu en élévation, le transformateur électroacoustique (5, 6) est conçu sous forme circulaire.

3. Combiné téléphonique selon la revendication 1 ou 2, **caractérisé en ce que**
le transformateur électroacoustique (5, 6) est insérable dans le système de signalisation optique (8 ; 81 à 86).

4. Combiné téléphonique selon l'une quelconque des revendications précédentes, **caractérisé en ce que** le système de signalisation optique (8 ; 81 à 86) est posé autour du transformateur électroacoustique.

5. Combiné téléphonique selon l'une quelconque des revendications précédentes, **caractérisé en ce que** le transformateur électroacoustique (5, 6) comporte une rainure périphérique dans laquelle un système de signalisation optique (8 ; 81 à 86) en forme de segment de cercle est inséré ou enfiché.

6. Combiné téléphonique selon l'une quelconque des revendications précédentes, **caractérisé en ce que** le système de signalisation optique (8 ; 81 à 86) et le transformateur électroacoustique (5, 6) sont séparés l'un de l'autre par une barrette périphérique du boîtier.

7. Combiné téléphonique selon au moins l'une quelconque des revendications précédentes, **caractérisé en ce que** le transformateur électroacoustique se compose d'un récepteur (5) circulaire, vu en élévation et **en ce que** le système de signalisation optique (8 ; 81 à 86) se compose d'au moins une section annulaire.

8. Combiné téléphonique selon la revendication 7, **caractérisé en ce que** le système de signalisation optique (8 ; 81 à 86) est disposé en forme de cercle fermé autour du récepteur (5).

9. Combiné téléphonique selon la revendication 7 ou 8, **caractérisé en ce que** le système de signalisation optique se compose de plusieurs segments de cercle partiels (81 à 83), qui sont séparés les uns des autres par des barrettes à orientation radiale et qui sont disposés de préférence en forme de cercle fermé autour du récepteur (5).

10. Combiné téléphonique selon la revendication 7, **caractérisé en ce que** le système de signalisation optique se compose de plusieurs anneaux (84 à 86) de différents diamètres, qui sont disposés sous forme concentrique autour du récepteur (5).

11. Combiné téléphonique selon au moins l'une quelconque des revendications précédentes, **caractérisé en ce que** le système de signalisation optique (8 ; 81 à 86) affiche au moins deux couleurs différentes l'une de l'autre, pour différentes fonctions ou différents états de service du combiné téléphonique (1).

12. Combiné téléphonique selon au moins l'une quelconque des revendications précédentes, **caractérisé en ce que** le système de signalisation optique (8 ; 81 à 86) comporte au moins deux zones séparées l'une de l'autre, de différentes colorations, pour différentes fonctions ou différents états de service du combiné téléphonique (1).

13. Combiné téléphonique selon au moins l'une quelconque des revendications précédentes, **caractérisé en ce que** le système de signalisation optique (8 ; 81 à 86) délivre au moins deux signaux lumineux de différentes fréquences, pour différentes fonctions ou différents états de service du combiné téléphonique (1).

14. Combiné téléphonique selon au moins l'une quelconque des revendications précédentes, **caractérisé en ce que** le système de signalisation optique (8 ; 81 à 86) délivre au moins deux signaux lumineux de différentes saturations de couleur ou intensités lumineuses, pour différents fonctions ou différents états de service du combiné téléphonique (1).

15. Combiné téléphonique selon au moins l'une quelconque des revendications précédentes, **caractérisé en ce que** le système de signalisation optique (8 ; 81 à 86) affiche au moins deux fonctions ou états de service du combiné téléphone (1) parmi:
- réception DECT du terminal de télécommunication,
- signalisation des appels entrants, lorsque le système de signalisation acoustique est arrêté ou activé,
- transfert de données, à partir du ou vers le combiné téléphonique (1),
- charge de l'accumulateur (13) du combiné téléphonique (1).

16. Combiné téléphonique selon au moins l'une quelconque des revendications précédentes, **caractérisé en ce que** différentes fonctions ou différents états de service du combiné téléphonique (1) sont affichés sur le système de signalisation optique (8 ; 81 à 86).
